(19) Europäisches Patentamt
European Patent Office
Office européen des brevets

(11) **EP 3 151 403 A2**

(12) **EUROPEAN PATENT APPLICATION**

(43) Date of publication:
05.04.2017 Bulletin 2017/14

(51) Int Cl.:
*H02M 1/08* (2006.01)

(21) Application number: 16186131.5

(22) Date of filing: 29.08.2016

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 29.09.2015 JP 2015191137

(71) Applicant: Hitachi, Ltd.
Tokyo 100-8280 (JP)

(72) Inventors:
• NORIMATSU, Yasuaki
Tokyo, 100-8280 (JP)
• KANODA, Akihiko
Tokyo, 100-8280 (JP)
• MABUCHI, Yuichi
Tokyo, 100-8280 (JP)
• SHIMADA, Takae
Tokyo, 100-8280 (JP)
• KADOTA, Mitsuhiro
Tokyo, 100-8280 (JP)
• KAWAGUCHI, Yuki
Tokyo, 100-8280 (JP)
• YONEKAWA, Akira
Tokyo, 100-8280 (JP)

(74) Representative: MERH-IP Matias Erny Reichl Hoffmann
Patentanwälte PartG mbB
Paul-Heyse-Strasse 29
80336 München (DE)

(54) **POWER SUPPLY DEVICE**

(57) In order to reduce the size of an isolation transformer, the present invention provides a power conversion device 1 including: a first inverter unit for obtaining a DC input and giving a high frequency output; an LLC transformer for converting the voltage of the high frequency output of the first inverter unit; a rectifier unit for DC-converting the voltage of the output of the LLC transformer 3; a second inverter unit for converting the DC output of the rectifier unit into AC; and a control circuit 13 for obtaining the gate power of a semiconductor device configuring the second inverter unit through a power supply transformer for the control circuit that is connected in parallel to the secondary circuit of the LLC transformer.

FIG. 1

**Description**

BACKGROUND OF THE INVENTION

Field of the Invention

The present invention relates to a power conversion device for DC power and AC power, a power supply device, and a control method for the power conversion device or the power supply device.

Description of Prior Art

A large number of isolation transformers are used for the power system. Such isolation transformers for interconnection with the power system are driven at a low frequency of several tens of Hz, which is the same as the frequency of the power system (50/60 Hz for Japan), and thus have a problem that it is difficult to achieve reduction in size and weight.

In order to address such a problem, recently the application of SST (Solid State Transformer: hereinafter simply referred to as SST) to high voltage and high power operation has been studied, and the use of the technology of SST is expected to contribute to a compact and lightweight configuration. The SST includes a high frequency transformer and a power converter circuit. The output or input of the SST is AC power of the same frequency as the conventional one. In the SST, a high frequency is generated by the power converter circuit (DC/DC converter and inverter) to drive the high frequency transformer to connect the input or output to the AC power system of the same frequency as the conventional one. In this way, the SST replaces the conventional isolation transformer. With this configuration, by driving the high frequency transformer at a high frequency of tens to hundreds of kHz, it is possible to achieve significant reduction in size and weight as compared to the conventional isolation transformer alone.

With the global expansion of the use of natural energy in power generation, such as solar power and wind power, there is a demand for PCS (Power Conditioning System: hereinafter simply referred to as PCS), which is a high-performance power converter that controls the power of natural energy and outputs to the power system, for example, as a new application of the power converter for power system operation. The PCS is used by connecting to the power system, so that a high voltage isolation transformer is used on the output side. For this reason, the PCS has to be driven at a low frequency of several tens of Hz which is the same frequency as the power system, and there is a problem that the size of the equipment is increased.

Further, there are power converts using high voltage power, such as, for example, for high voltage motors and pumps as well as for railway, and some of such power converts also use a high voltage isolation transformer on the input side, in addition to the power converter for power system interconnection. The high voltage isolation transformer on the input side, like on the output side, is driven at a low frequency of several tens of Hz, which is the same as the frequency of the power system, by receiving power from the power system. Thus, there is the same problem of increase in size of equipment.

For this reason, in order to apply the SST to achieve a smaller and lightweight power converter for high voltage applications, it is necessary to isolate between the primary and secondary sides of the high frequency isolation transformer also in the power supply of the control circuit of the power converter.

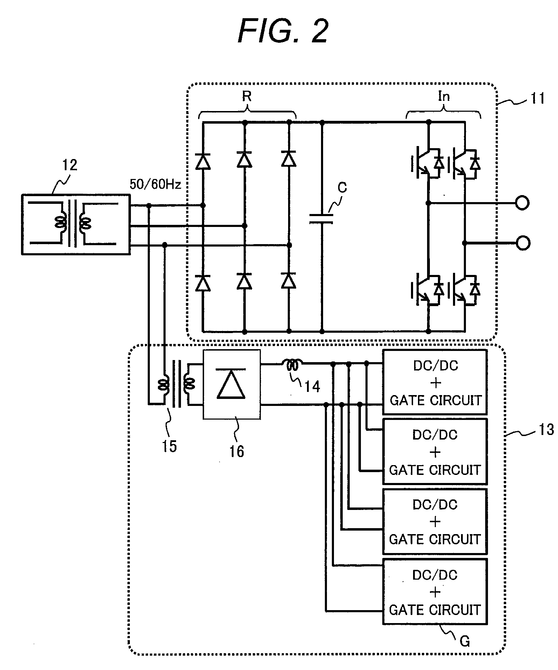

In order to meet this requirement, the configuration of Fig. 2 has been known as an example of applying isolation between the primary and secondary sides of the isolation transformer used in a general high voltage power converter for high voltage applications as well as a control circuit power supply of the power converter. Fig. 2 shows a high voltage inverter with a multi-level configuration that uses multiplex transformer for the insulating transformer. Fig. 2 is a configuration example with a multilevel of one stage.

In the conventional configuration of Fig. 2, the power of a main circuit inverter 11 is input from a three-phase AC multiplex transformer 12, and then a single-phase AC is output from the main circuit inverter 11. In this way, the voltage value or frequency can be adjusted and obtained from the main circuit inverter 11 as appropriate. Note that the main circuit inverter 11 includes a rectifier unit R, a smoothing capacitor C, and an inverter unit In.

The power for a control circuit 13 to control the switching of the semiconductor devices configuring the inverter unit In within the main circuit inverter 11 is supplied in such a way that a single phase is extracted from the output of the three-phase AC multiplex transformer 12. The control circuit 13 includes a single-phase transformer 15, a single-phase bridge rectifier circuit 16, a DC reactor 14, and a gate circuit G that is provided for each semiconductor device.

The multi-level high voltage inverter of Fig. 2 has the above-described connection configuration with the multiplex transformer 12, the main circuit inverter 11, and the control circuit 13, in order to provide the isolation (a few to tens of kV) from the power system by the multiplex transformer 12. With this configuration, the single-phase transformer 15 for the control circuit 13 can be reduced to a voltage (about several hundred V) that is required for one stage of the multiple levels. In addition, it is also possible to eliminate the need for the use of the control circuit to control the voltage conversion.

Japanese Unexamined Patent Application Publication No. 2007-151224 discloses a high voltage inverter power supply device with basically the same configuration as Fig. 2, although there is a difference in that the multiplex transformer 12 is one phase.

However, since the single-phase transformer 15 used in Japanese Unexamined Patent Application Publication No. 2007-151224 is driven at 50/60 Hz which is the same frequency of the power system, it is in particular difficult to reduce the size of the transformer core. Further, the conversion to DC voltage for the control circuit 13 is done by the single-phase bridge rectifier circuit 16 and has the property that the voltage change increases by the load of the control circuit. For this reason, it is necessary to add a DC/DC converter for dealing with the voltage change, as well as the DC reactor 14 for reducing the voltage change as needed. As a result, the size of the power supply for the control circuit 13 is increased.

Note that as the configuration of the main circuit inverter 11, it can be considered a control power supply configuration to step down the DC voltage by the DC/DC converter. Also, in this case, it is possible to configure to use the multiplex transformer 12 to provide the isolation from the power system. In addition, the size can be reduced because the transformer and the rector, which are required for the DC/DC converter, can be driven at the driving frequency of the DC/DC converter. However, in this configuration, the DC voltage of the main circuit inverter 11 is several hundred V. Thus, it is necessary to apply devices that deal with several hundred V used for the main circuit inverter 11 also to the DC/DC converter for the control circuit 13. Further, it is necessary to provide an insulation distance of several hundred V for each device, so that it is necessary to provide the control circuit 13 for the DC/DC converter that deals with several hundred V input. As a result, the size of the power supply for the control circuit 13 increases also in the configuration to which the DC/DC converter is applied.

SUMMARY OF THE INVENTION

Accordingly, an object of the present invention is to provide a power conversion device capable of reduction in size of the isolation transformer, a power supply device, and a control method for the power conversion device or the power supply device.

In order to solve the above problems, the present invention provides a power conversion device including: a first inverter unit for obtaining a DC input and giving a high frequency output; an LLC transformer for converting the voltage of the high frequency output of the first inverter unit; a rectifier unit for DC-converting the output of the LLC transformer; a second inverter unit for converting the DC output of the rectifier unit into an AC output; and a control circuit for obtaining the gate power of a semiconductor device configuring the second inverter unit through a power supply transformer for the control circuit that is connected in parallel to the secondary circuit of the LLC transformer.

According to the present invention, it is possible to provide a power conversion device capable of reduction in size of the isolation transformer, a power supply device, and a control method for the power conversion device or the power supply device.

Further, according to an embodiment of the present invention, it is possible to reduce the volume of the power supply transformer for the control circuit by increasing the frequency input to the power supply transformer for the control circuit, thus eliminating the need for the use of the control circuit involved in the voltage conversion. Further, a low-voltage device can be used for the components except for the power supply transformer for the control circuit. As a result, it is possible to reduce the size and weight of the whole control circuit, so that a compact and lightweight high voltage power converter can be obtained.

BRIEF DESCRIPTION OF THE DRAWINGS

Fig. 1 is a block diagram showing a configuration of a power conversion device according to a first embodiment of the present invention;
Fig. 2 is a circuit diagram showing a configuration of a conventional multi-level high voltage inverter;
Fig. 3 is a block diagram showing a configuration of a three-phase power supply by the power conversion device according to the first embodiment of the present invention;
Fig. 4 is a diagram in which the semiconductor devices of a second inverter unit In 2 of Fig. 1 are changed from MOS-FET to IGBT;
Fig. 5 is a block diagram showing a configuration in which a power supply transformer 4 for the control circuit in Fig. 1 is divided and distributed in series;
Fig. 6 is a block diagram showing a configuration in which the power supply transformer 4 for the control circuit in Fig. 1 is divided and distributed in parallel;
Fig. 7 is a diagram showing the voltage and current waveforms when the LLC resonant frequency is equal to the driving frequency;
Fig. 8 is a diagram showing the voltage and current waveforms when the LLC resonant frequency is greater than the driving frequency;
Fig. 9 is a diagram showing the voltage and current waveforms when the LLC resonant frequency is smaller than the driving frequency;
Fig. 10 is a block diagram showing a configuration of a power conversion device according to a third embodiment;
Fig. 11 is a block diagram showing a configuration of a power conversion device according to a fourth embodiment; and
Fig. 12 is a diagram showing the relationship among the terminal voltage Vdc of a second capacitor C2, the solar power output, and the driving frequency, with respect to the input voltage Vin generated by solar power.

DETAILED DESCRIPTION OF PREFERRED EMBODIMENTS

Hereinafter, an example of an embodiment of a power conversion device and a control method thereof according to the present invention will be described with reference to the accompanying drawings.

First Embodiment

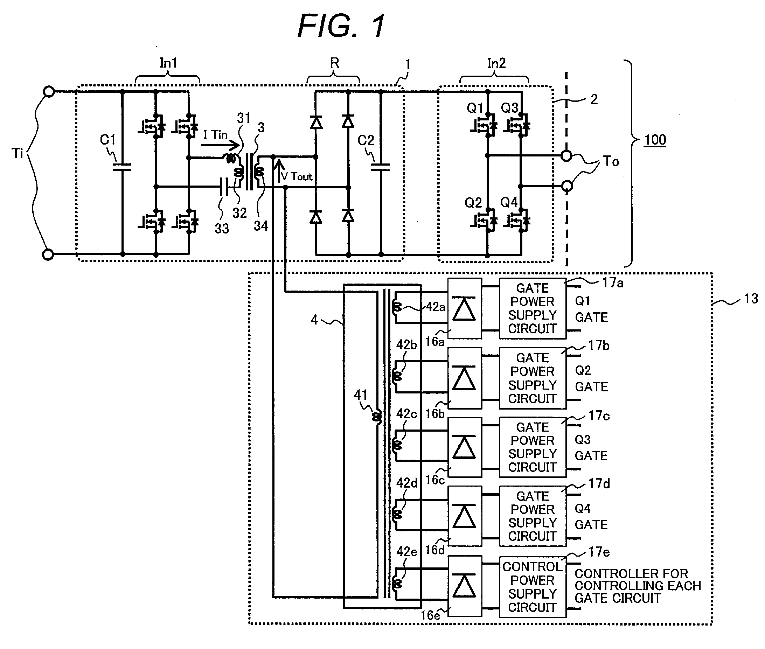

First, the configuration of a power conversion device according to a first embodiment will be described with reference to Fig. 1.

In the power conversion device of the first embodiment shown in Fig, 1, it is assumed to use a power conversion device for a several hundred kW to several MW class PCS, with input of DC 600 to 1000 V and output interconnected to a high voltage system of 6.6 kV.

In the power conversion device of Fig. 1, a main circuit 100 includes a series circuit of a full-bridge LLC resonant converter 1 and a single-phase inverter 2. The full-bridge LLC resonant converter 1 connects its input terminal Ti, for example, to a DC power supply generated by solar power, and provides an AC output to the output terminal To of the single-phase inverter 2.

The full-bridge LLC resonant converter 1 includes a smoothing capacitor C1, a first inverter unit In 1, an LLC transformer 3, a rectifier unit R, and a smoothing capacitor C2 from the input side. Here, the LLC transformer 3 is an isolation transformer that is referred to as LLC, because a first reactor 31, a second reactor 32 as the primary winding, and a capacitor 33 are arranged in series on the primary winding side of the transformer.

Further, in Fig. 1, the single-phase inverter 2 is configured including a second inverter unit In 2. In such a configuration of the main circuit 100, it is shown through an example that the first inverter unit In 1 and the second inverter unit In 2 have a single-phase full-bridge inverter, and that the semiconductor devices of these inverter units In are formed of MOS-FET.

With this configuration of the main circuit 100, in the first inverter unit In 1, the DC input from the solar power generation, which is applied to the input terminal Ti, is converted to a high frequency AC, is adjusted to an arbitrary voltage by the LLC former 3, and is converted to DC by the rectifier unit R. Then, in the second inverter unit In 2, the DC output is converted, for example, to the frequency (50/60 Hz) that can be connected to the commercial AC power supply, and is output to the output terminal To.

The control circuit 13 of Fig. 1 obtains power from the secondary winding 34 of the LLC transformer 3 through the power supply transformer 4 for the control circuit. In the example of the figure, the power supply transformer 4 for the control circuit includes one primary winding 41, and a plurality of secondary windings 42a, 42b, 42c, 42d, and 42e that are electromagnetically coupled to the primary winding 41. Of these secondary windings, the secondary windings 42a, 42b, 42c, 42d provide DC power supply to power supply circuits 17a, 17b, 17c, 17d through single-phase bridge rectifier circuits 16a, 16b, 16c, 16d, respectively. The DC power of the power supply circuit 17a, 17b, 17c, 17d is used as the gate power-er given to the gates of the semiconductor devices Q1, Q2, Q3, Q4 of the second inverter unit In 2.

Note that the power of the line from the secondary winding 42e of the power supply transformer 4 for the control circuit to the single-phase bridge rectifier circuit 16e, and to the power supply circuit 17e is the power supply for the gate circuit control controller not shown.

With this configuration, since the LLC transformer 3 operates at a high frequency, the size of the device configuration can be reduced. Further, the power supply transformer 4 for the control circuit also operates at a high frequency and can be reduced in size. Note that in this figure, the control circuit 13 supplies the gate power of the MOS-FET semiconductor devices Q1, Q2, Q3, and Q4 that configure the second inverter unit In 2, and it does not show the control circuit for the first inverter unit In1. Although not described here, the control circuit for the first inverter unit In 1 is separately provided. The reason is that the voltage level to be isolated (generally about AC 100 volts) is low on the side of the first inverter unit In 1, requiring no severe measures for isolation on the control circuit 13, so that the existing technology is good enough to deal with it.

As descried above, the configuration of the main circuit 100 of Fig. 1 is such that the DC output after rectification by the full-bridge diode within the full-bridge LLC resonant converter 1 is converted to AC and output to the power system through the single-phase inverter 2. Note that in the embodiment of Fig. 1, it is assumed to use the single-phase inverter 2. However, a three-level inverter configuration can also be used.

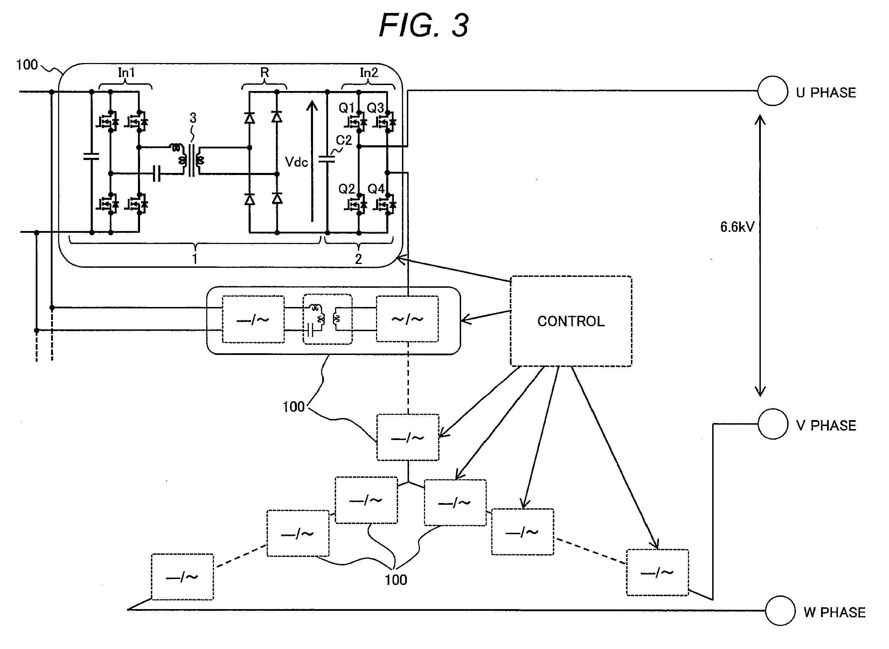

Fig. 1 shows a single-phase output. However, a three-phase output is required when it is connected to the AC system. For this reason, an application suitable for the three-phase configuration of Fig. 3 is practically made. Fig. 3 is a diagram showing a configuration of a three-phase power supply device using the power conversion device according to the first embodiment. This application is for the configuration in which the output side of the main circuit 100 of the single phase output is connected in cascade to each of the three phases of U, V, and W.

According to the first embodiment of the present invention for which a detailed configuration of the power conversion device is shown in Fig. 1 and an example of development into the three-phase power system is shown in Fig. 3, it is possible to adopt a series multi-level configuration in which the output of the single phase inverter 2 is connected in series, in order to deal with high voltage output. For example, each input voltage of the main circuit 100 is in the range of DC 600 to 1000 V, and at the same time, 6.6 kV can be obtained as the voltage between the three phase lines. This means that the semiconductor devices Q1, Q2, Q3, and Q4 of relatively low voltage such as 1700 V, 1200 V, and 650 V, can be used for the single-phase inverter 2 alone. Further, the terminal voltage Vdc of the second capacitor C2 also becomes equivalent to the voltage of the semiconductor devices Q1, Q2, Q3, and Q4. This means that a capacitor of lower voltage than the power system voltage can be used for the DC capacitor C2.

In Figs. 1 and 3, the specifications and functions of each part configuring the power conversion device have been described with examples. However, the following is enough for the specifications and functions described above. The following effects can be obtained by these specifications and functions.

First, since the full-bridge LLC resonant converter 1 is operated at a DC voltage of 1000 V or less, the MOS-FET suitable for high frequency drive is assumed to be used for the first inverter unit In 1. The switching frequency of the semiconductor device of the first inverter unit In 1 is assumed to be in the range of tens to hundreds of kHz. For the used MOS-FET, it is possible to apply SiC MOS-FET that is suitable for high voltage and high frequency switching. However, other transistors can also be used as long as they have the same function.

In the rectifier unit R on the secondary side of the LLC resonant converter 1, it is assumed that rectifying is performed by diode. In addition to Si diode, Si schottky barrier diode and SiC schottky barrier diode can be used to reduce conduction losses. It is also possible to synchronously use SiC MOS-FET for rectifying to reduce the conduction loss. However, other transistors can also be used as long as they have the same function.

The LLC transformer 3 is an isolation transformer that has a function to isolate from the power system voltage. It is referred to in this way because the first reactor 31, the second reactor 32 as the primary winding, and the capacitor 33 are arranged in series on the transformer primary winding side. Further, of these circuit components, the first reactor 31 provides the leakage inductance Lr, the second reactor 32, as the primary winding, provides the excitation inductance Lm of the high frequency transformer, and then the capacitor 33 provides the resonant capacitor capacitance Cr. The LLC resonant transformer 3 has a configuration in which the leakage inductance Lr, which is resonated with the excitation inductance Lm of the high frequency transformer, is connected to the resonant capacitor capacitance Cr in order to achieve LLC resonance. Note that the leakage inductance Lr can be integrated within the high frequency transformer as a structure that can adjust the constant of the leakage flux within the high frequency transformer. Although it is assumed to use a film capacitor for the resonant capacitor capacitance Cr, other capacitors can also be used as long as they have the same function.

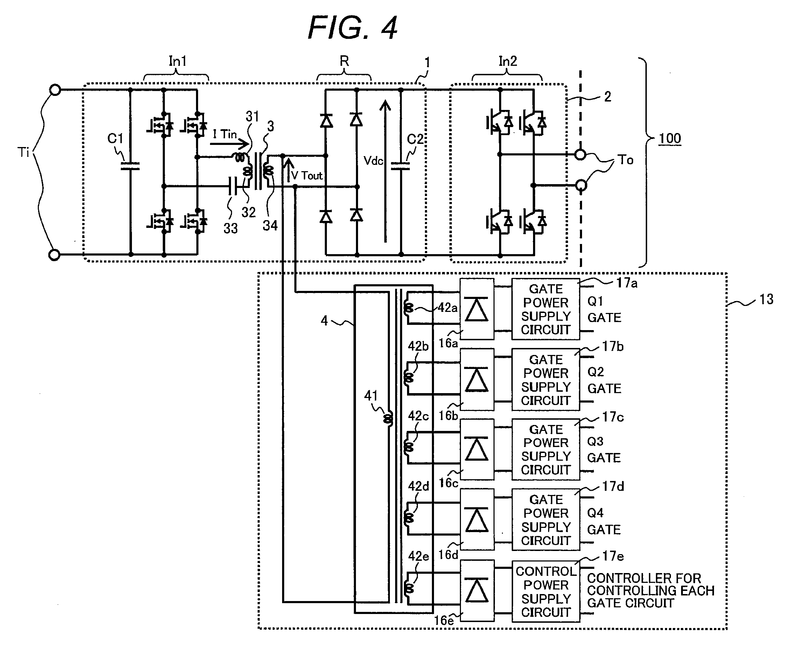

Fig. 4 is a diagram showing the state in which the semiconductor device of the second inverter unit In 2 is changed to IGBT from MOS-FET in Fig. 1. In the case of the second inverter unit In 2, the switching frequency of the series-multi PWM is as low as several kHz or less in total, which is lower than the driving frequency of the LLC resonant converter 1. Thus, the IGBT can be applied as shown in Fig. 4.

Further, the following configuration can be used for the application to the three-phase power system of Fig. 3. The series connected configuration in Fig. 3 assumes that the single-phase inverter 2 has up to eight to six series-connected stages per phase. In Fig. 3, the use of a configuration of Y connection is considered in order to reduce the number of stages of the single-phase inverter 2, but it is also possible to achieve this by a configuration of $\Delta$ connection. In the case of the Y connection, the phase voltage is $1/\sqrt{3}$ with respect to the line voltage 6.6 kV, and the DC voltage of all phases is based on the multiplier of $\sqrt{2}$. Thus, in the case of eight stages, the terminal voltage Vdc of the second capacitor C2 is about 600 to 700 V. As a result, the terminal voltage Vdc becomes the voltage at which a 1200 V MOS-FET can be used for the inverter 2, making it possible to achieve high voltage output with low voltage devices. While the voltage to ground for the LLC resonant converter 1 is 1000 V or less, the single-phase inverter 2 has a floating connection and it is assumed that the LLC transformer 3 has an insulating function that supports 6.6 kV of the power system. By adopting the series multi-level configuration as described above, it is possible to achieve a configuration that can deal flexibly with other output voltages than 6.6 kV, by just changing the number of stages and changing the isolation of the LLC transformer 3, accordingly.

Further, the following is enough for the specifications and functions described above. The following effects can be obtained by these specifications and functions.

The power supply transformer 4 for the control circuit shown in Fig. 1 is configured to connect to the secondary side of the LLC transformer 3. The power supply transformer 4 for the control circuit is driven at tens to hundreds of kHz by the LLC control. It is possible to convert the voltage from hundreds of V on the primary side, to a few to tens of V on the secondary side by driving the power supply transformer 4 for the control circuit at tens to hundreds of kHz by the LLC control.

Here, the power required for the control power supply 13 is less than 1% with respect to 100% output of the single-phase inverter 2. Thus, the excitation inductance of the power supply transformer 4 for the control circuit is assumed to be set to a value large enough for the LLC transformer 3. For example, the excitation inductance Lm of the LLC transformer 3 is hundreds of $\mu$H, while the excitation inductance of the power supply transformer 4 for the control circuit is assumed to be set to a value greater than hundreds of mH. However, the present invention is not limited to this example.

Although the driving voltage will be described in detail below, the controller for controlling the voltage conversion is not required since the power supply transformer 4 for the control circuit is driven by the LLC control.

As described above, the LLC transformer 3 provides isolation from the power system, so that the power supply transformer 4 for the control circuit can be reduced to an isolation function of about hundreds of V, which is greater than the terminal voltage Vdc of the second capacitor C2.

It is assumed that a multi-output configuration is used for the secondary side of the power supply transformer 4 for the control circuit. This configuration allows isolated output on the power supply circuits 17a, 17b, 17c, 17d for the gates of the semiconductor devices Q1, Q2, Q3, Q4, and on the controller (micro controller, or the like) for controlling the respective gates. Each of the gates of the semiconductor devices Q1, Q2, Q3, Q4 is provided with a voltage stabilizing circuit (linear regulator, or the like) and a photo MOS for driving. In this configuration, it is assumed that the controller drives the light-emitting diode of the photo MOS to control the gate. The power required for each output is assumed to be about tens to hundreds of mW. However, the present invention is not limited to this example.

According to the assumed configuration described above, a pulse transformer is assumed to be used for the power supply transformer 4 for the control circuit. However, the present invention is not limited to the configuration described above, and other configurations can be used as long as they have the same function.

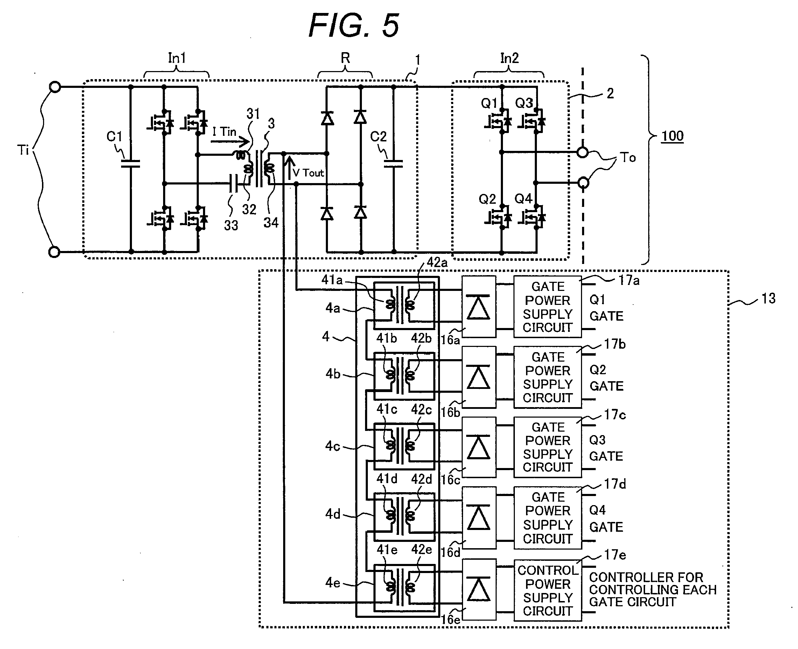

Fig. 5 shows the configuration in which the power supply transformer 4 for the control circuit of Fig. 1 is divided and distributed in series. In Fig. 1, the primary winding and the secondary winding are configured in a 1:n of turn ratio, while in Fig. 5, the power supply transformers for the control circuit, 4a, 4b, 4c, 4d, 4e, with n=5 windings, are connected in series as the power supply transformer 4 for the control circuit on the secondary side of the LLC transformer 3. In this connection form, the power supply transformer 4 for the control circuit is divided into sections for each of the power supply circuits 17a, 17b, 17c, 17d and the divided sections are distributed in series. This is assumed to be applied when reduction in size is possible by the distribution arrangement.

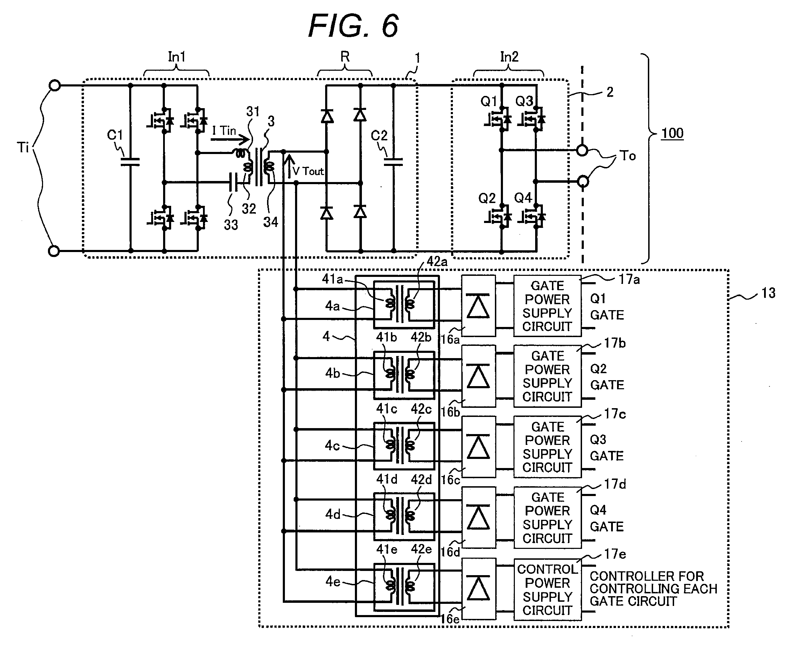

Fig. 6 is a diagram showing the configuration in which the power supply transformer 4 for the control circuit of Fig. 4 is divided and distributed in parallel. In the example of Fig. 5, it is assumed that the power supply transformer 4 for the control circuit is divided for each of the power supply circuits 17a, 17b, 17c, 17d, 17e, and the divided sections (42a, 42b, 42c, 42d, 42e) are distributed in series and then connected in series. However, in order to increase the excitation inductance, the power supply transformer 4 for the control circuit can be divided for each of the power supply circuits 17a, 17b, 17c, 17d, 17e and the divided sections (42a, 42b, 42c, 42d, 42e) can be connected in parallel as shown in Fig. 6.

Second Embodiment

In the power conversion device according to the present invention shown in Fig. 1, the LLC transformer 3 is installed within the LLC resonant converter 1. In the second embodiment, a control method specific to the LLC resonant converter 1 including the LLC transformer 3, as well as the effect of the control method will be described.

In the control of the first inverter unit In 1 within the LLC resonant converter 1 according to the present invention, the frequency control is performed using a 50% duty cycle with dead time, instead of PWM. In this case, the resonant frequency is given by the values of the excitation inductance Lm of the high frequency transformer, the leakage inductance Lr, and the resonant capacitor capacitance Cr, which are described in relation to the first inverter unit In 1. At this time, the resonant frequency is assumed to be set to tens to hundreds of kHz.

Note that the control of the LLC resonant converter 1 is done by the control circuit for controlling the ON and OFF of the four pairs of semiconductor devices configuring the first inverter unit In 1 of full-bridge type. The control circuit itself is of a circuit configuration that is commonly used. Although the detailed description of the circuit configuration is omitted, the control circuit basically controls the semiconductor devices in the following way.

For example, of the four pairs of semiconductor devices of full-bridge type, it is assumed that the semiconductor devices shown in the upper right and lower left sides of Fig. 1 are the first pair, and the semiconductor devices shown in the lower right and upper left sides are the second pair. In this case, the control circuit controls to alternately produce a first conductive state in which the first pair is ON and the second pair is OFF, and a second conductive state in which the second pair is ON and the first pair is OFF. The ON and OFF control is performed at a driving frequency, with a time period from the first conductive state to the second conductive state and back to the first conductive state, as one cycle.

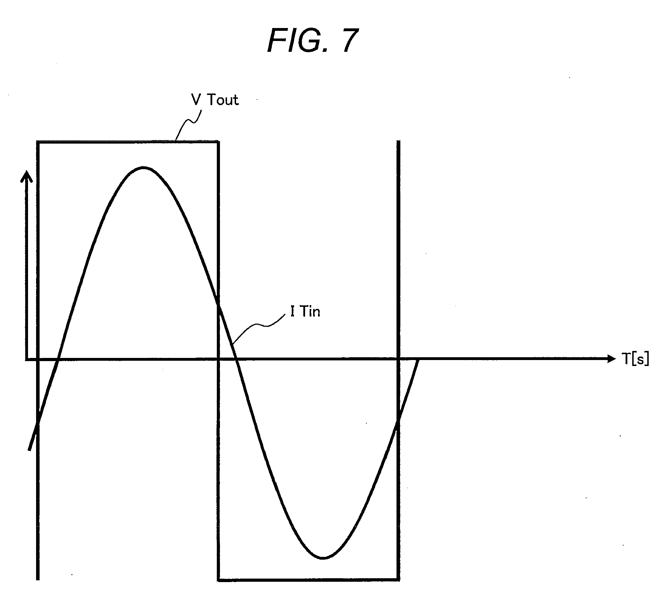

The magnitude relationship between the LLC resonant frequency and the driving frequency, as well as the relationship between the voltage and the current waveforms of the first inverter unit In 1 will be described with reference to Figs. 7, 8, and 9. In these figures, the horizontal axis represents the time and the vertical axis represents the magnitude of the voltage and current in one cycle period.

Fig. 7 shows the voltage and current waveforms when the LLC resonant frequency is equal to the driving frequency. In this case, the driving frequency is controlled by the control circuit for controlling the ON and OFF of the four pairs of semiconductor devices configuring the first inverter unit In 1 of full-bridge type described above. At the same time, the driving frequency is exactly the same as the resonant frequency given by the values of the excitation inductance Lm of the LLC transformer 3 which is the high frequency transformer, the leakage inductance Lr, and the resonant capacitor capacitance Cr.

When the LLC resonant frequency is equal to the driving frequency, the current through the MOS-FET is flowing in a reverse direction through the body diode of the MOS-FET in the ON state of the MOS-FET which is the semiconductor device. In this case, the zero voltage switching (ZVS) is achieved and no switching loss occurs in the ON state. When the MOS-FET is in the OFF state, the current flowing through the MOS-FET peaks out at a sufficiently low level and the switching loss is also reduced in the OFF state. In this way, it is possible to achieve a highly efficient switching by the LLC resonant control. As a result, it is possible to reduce the size of the cooler of the power device.

When the LLC resonant frequency is controlled to be equal to the driving frequency by the LLC control, the voltage on the secondary side of the LLC transformer 3 is as shown in V Tout. In other words, a rectangular shaped voltage output can be obtained. Thus, a rectangular wave voltage is input to the power supply transformer 4 for the control circuit. For this reason, a voltage corresponding to the turn ratio to the terminal voltage Vdc of the second capacitor C2 is output to the secondary side of the power supply transformer 4 for the control circuit. Thus, similarly to the case of the LLC resonant converter 1, there is no voltage change and the DC reactor is not required.

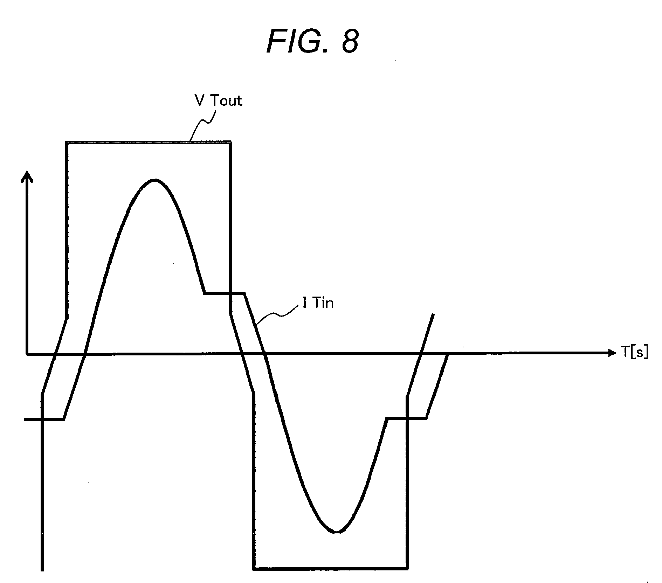

Fig. 8 shows the voltage and current waveforms when a step-up operation is performed by reducing the driving frequency to a level lower than the LLC resonant frequency.

When the driving frequency is reduced to a level lower than the LLC resonant frequency, as shown in the waveform of the current I Tin on the primary side of the LLC transformer 3, the current through the MOS-FET is flowing in a reverse direction through the body diode of the MOS-FET when the MOS-FET is in the ON state. In this case, the zero voltage switching (ZVS) is achieved and no switching loss occurs in the ON state. In the OFF state, the current flowing through the MOS-FET is reduced to a sufficiently small value and stays constant after the current peaks out. Thus, the switching loss in the OFF state becomes small like the case of the resonant frequency drive.

When the LLC resonant frequency is controlled to be higher than the driving frequency by the LLC control, the voltage on the secondary side of the LLC transformer 3 becomes a rectangular wave voltage as shown in V Tout. This rectangular wave voltage has a waveform with a little delay at the rising edge and the falling edge with respect to the power supply transformer 4 for the control circuit, but basically a rectangular wave is input. Thus, a voltage corresponding to turn ratio to the terminal voltage Vdc of the second capacitor C2 is output to the secondary side output of the power supply transformer 4 for the control circuit. As a result, similarly to the case of the LLC resonant converter 1, there is no voltage change and the DC reactor is not required.

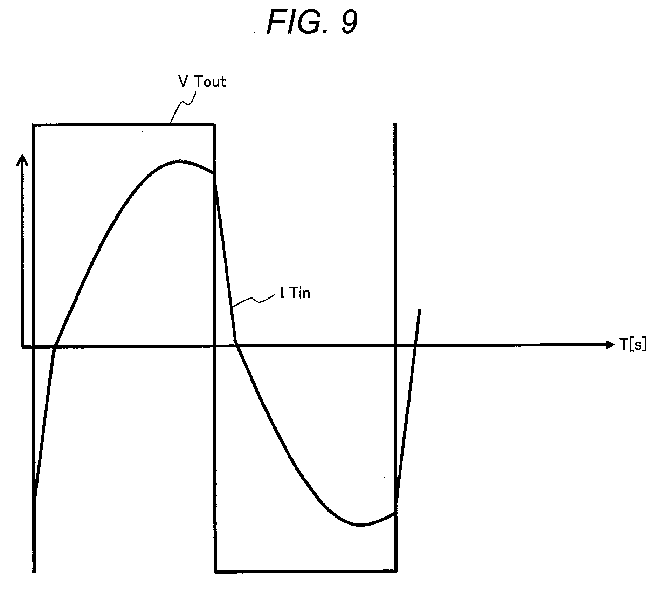

Fig. 9 shows the voltage and current waveforms when a step-down operation is performed by increasing the driving frequency to a level higher than the LLC resonant frequency.

When the driving frequency is increased to a level higher than the LLC resonant frequency, as shown in the waveform of the current I Tin on the primary side of the LLC transformer 3, the current through the MOS-FET is flowing in a reverse direction through the body diode of the MOS-FET when the MOS-FET is in the ON state. In this case, the zero voltage switching (ZVS) is achieved and no switching loss occurs in the ON state. In the OFF state, the current flowing through the MOS-FET is not reduced and is blocked, so that the switching loss is increased in the OFF state. However, in the case of the control operation by PCS, it is possible to minimize the efficiency reduction by limiting the voltage range for the step-down control.

When the driving frequency is increased to a level higher than the LLC resonant frequency by the LLC control, the voltage on the secondary side of the LLC transformer 3 is as shown in V Tout. In other words, a rectangular shaped voltage output is obtained. Thus, a rectangular wave voltage is input to the power supply transformer 4 for the control circuit. For this reason, the voltage corresponding to the turn ratio to the terminal voltage Vdc of the second capacitor C2 is output to the secondary side of the power supply transformer 4 for the control circuit. Thus, similarly to the case of the LLC resonant converter 1, there is no voltage change and the DC reactor is not required.

From the three types of operational modes in the LLC control (LLC resonant frequency=driving frequency, LLC resonant frequency>driving frequency, and LLC resonant frequency<driving frequency), an appropriate operational mode is selected and executed in the actual operating situation of the power conversion device.

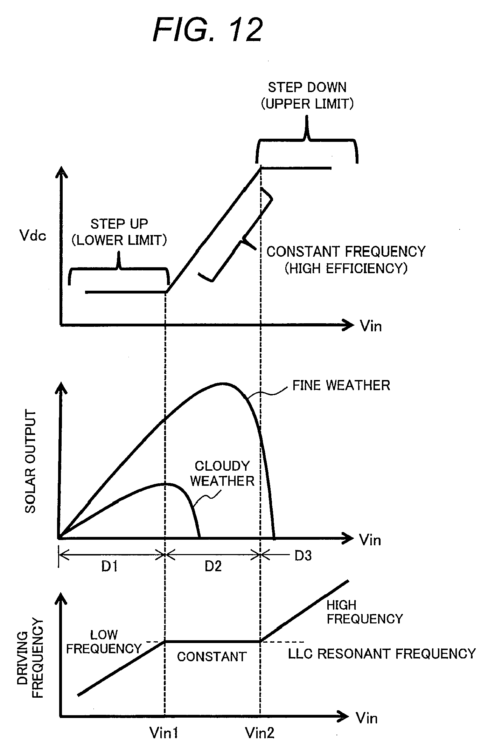

For example, with a system configuration designed to obtain the DC input of the power conversion of Fig. 1 that is generated by solar power, it is preferable that the operating mode is switched as shown in Fig. 12 according to the conditions of the weather. Fig. 12 is a diagram showing an example case of the LLC control when the system configuration is applied to solar power generation.

Fig. 12 shows the relationship among the terminal voltage Vdc of the second capacitor C2, the solar power output, and the driving frequency with respect to the input voltage Vin from the solar power generation.

When focusing on the relationship between the input voltage Vin from the solar power generation and the solar power output that is shown in the middle part of Fig. 12, the input voltage Vin from the solar power generation as well as the solar power output can be varied in magnitude according to the weather (fine weather, cloudy weather). In the operation of the second embodiment, the range of the voltage input to the PCS (namely, the input voltage Vin from the solar power generation) is divided into the first area D1, the second area D2, and the third area D3.

In the first area D1 in which the input voltage Vin is lower than the first threshold Vin 1, step-up control is performed by reducing the driving frequency to a lower level than the LLC resonant frequency by the LLC control so that the terminal voltage Vdc of the second capacitor C2 is not less than the lower limit. In the third area D3 in which the input voltage Vin is higher than the second threshold Vin 2, step-down control is performed by increasing the driving frequency to a level higher than the LLC resonant frequency by the LLC control so that the terminal voltage Vdc of the second capacitor C2 is not more than the upper limit. In the second area D2 between the first threshold Vin 1 and the second threshold Vin 2, the driving frequency is made equal to the LLC resonant frequency and constant by the LLC control in order to achieve a highly efficient operation.

Note that the setting of the areas can be determined by the upper and lower limits of the terminal voltage Vdc of the second capacitor C2. In this case, the second threshold Vin 2 determining the upper limit area is preferably more than the maximum output point voltage in normal fine weather. In this way, the probability that the step-down operation will take place in the third area is reduced.

The voltage on the secondary side of the LLC transformer 3 by the LLC control becomes V Tout. Since a rectangular wave is input to the power supply transformer 4 for the control circuit, the voltage corresponding to the turn ratio to the terminal voltage Vdc of the second capacitor C2 is output to the secondary side output. Thus, similarly to the case of the LLC resonant converter 1, there is no voltage change and the DC reactor is not required.

Even if the load is changed in the three operations described above, V Tout is still a rectangular wave and so it is possible to generate the control voltage by the turn ratio to the terminal voltage Vdc of the second capacitor C2, independent of the load.

Because of the above reasons, by connecting the power supply transformer 4 for the control circuit to the secondary side of the LLC transformer 3, it is possible to meet all the requirements for reducing the withstand voltage, eliminating the need of the voltage conversion drive control, reducing the voltage variation by the load, and reducing the size of the transformer by increasing the frequency. As a result, it is possible to achieve smaller size and lighter weight in the whole power supply device.

Third Embodiment

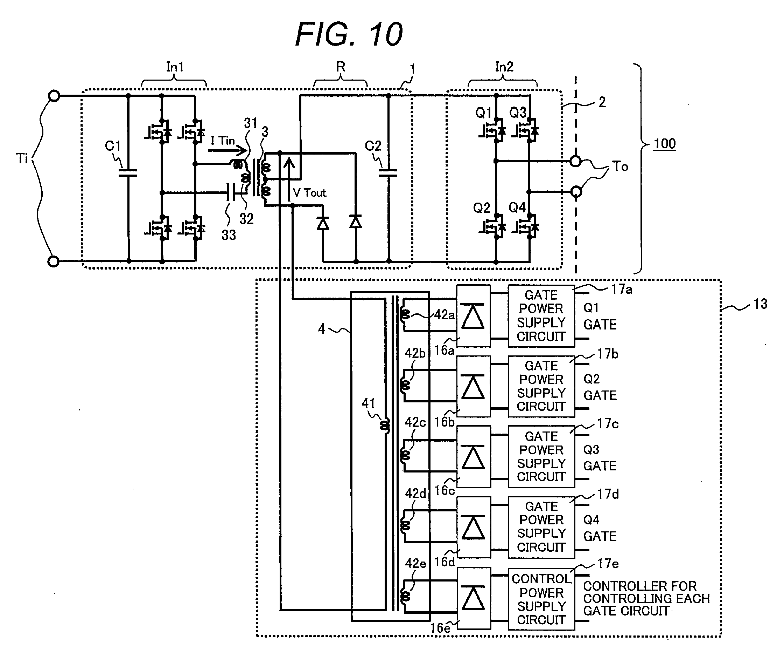

Fig. 10 shows a configuration of a power conversion device according to a third embodiment. The configuration of the third embodiment is such that the number of semiconductor devices configuring the rectifier unit R of the LLC resonant converter 1 is reduced to half. The voltage width input to the LLC transformer 3 on the primary side is half of the full-bridge type configuration shown in Fig. 1. However, it is also possible to adjust the voltage width by the turn ratio of the LLC transformer 3.

The control method of the third embodiment is performed by control of the LLC resonant converter 1, which is the frequency control at a 50% duty cycle with dead time. The resonant frequency is given by the values of the excitation inductance Lm, the leakage inductance Lr, and the resonant capacitor capacitance Cr as described above. The resonant frequency is assumed to be set to tens to hundreds of kHz.

Also in the third embodiment, the waveforms when the voltage is changed are the same as those in Figs. 7, 8, and 9. Since V Tout is still a rectangular wave even if the load is changed, it is possible to generate the control voltage by the turn ratio to the terminal voltage Vdc of the second capacitor C2, independent of the load.

Fourth Embodiment

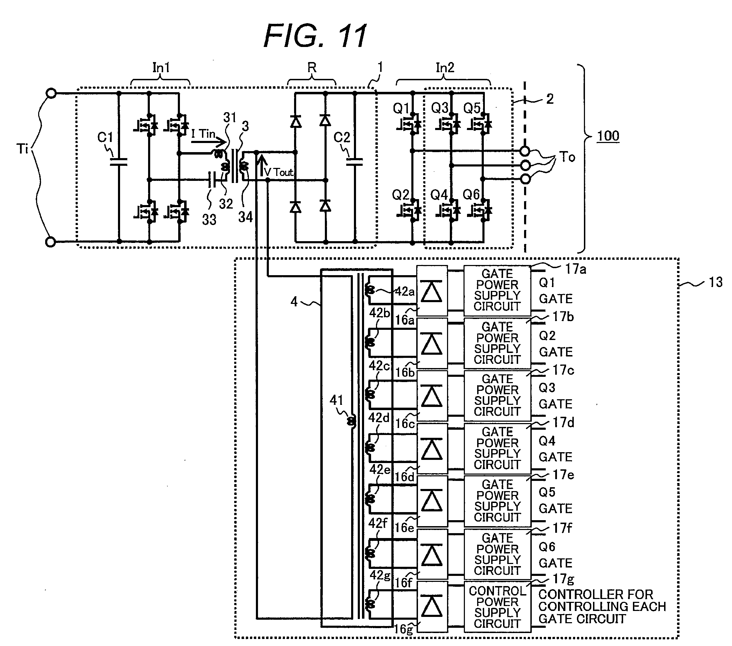

Fig. 11 shows a configuration of a power conversion device according to a fourth embodiment. The configuration of the fourth embodiment assumes a system that is linked to the three-phase output in a single stage configuration, to output power to drive the motor and pump.

It is assumed that the number of outputs of the power supply transformer 4 for the control circuit is six for the semiconductor device drive, and one for the control controller, hence seven in total, but any number of outputs is possible as long as it has the same function.

The control method of the fourth embodiment is performed by the control of the LLC resonant converter 1, which is the frequency control at a 50% duty cycle with dead time. The resonant frequency is given by the values of the excitation inductance Lm, the leakage inductance Lr, and the resonant capacitor capacitance Cr as described above. The resonant frequency is assumed to be set to tens to hundreds of kHz.

Also in the fourth embodiment, the waveforms when the voltage is changed are the same as shown in Figs. 7, 8, and 9. Since V Tout is still a rectangular wave even if the load is changed, it is possible to generate the control voltage by the turn ratio to the terminal voltage Vdc of the second capacitor C2, independent of the load.

Although the present invention has been illustrated and described using four exemplary embodiments, it goes without saying that the contents described in the embodiments can be combined according to the application.

**Claims**

**1.** A power conversion device (1) comprising:

a first inverter unit for obtaining a DC input and giving a high frequency output;

an LLC transformer (3) for converting the voltage of the high frequency output of the first inverter unit;

a rectifier unit for DC-converting the output of the LLC transformer;

a second inverter unit for converting the DC output of the rectifier unit into AC; and

a control circuit (13) for obtaining the gate power of a semiconductor device configuring the second inverter unit through a power supply transformer for the control circuit that is connected in parallel to the secondary circuit of the LLC transformer.

2. The power conversion device (1) according to claim 1, wherein the LLC transformer (3) is configured such that a primary circuit formed with a first reactor, a second reactor as a primary winding, and a capacitor are arranged in series.

3. The power conversion device (1) according to claim 1 or 2,

wherein the power supply transformer for the control circuit (13) includes one primary winding connected in parallel to the secondary circuit of the LLC transformer (3), as well as a plurality of secondary windings electromagnetically coupled to the primary winding, and

wherein the power supply transformer for the control circuit (13) obtains the gate power of each semiconductor device configuring the second inverter unit, from the output of each secondary winding.

4. The power conversion device (1) according to claim 1 or 2,

wherein the power supply transformer for the control circuit (13) includes a plurality of series-connected primary windings that are connected in parallel to the secondary circuit of the LLC transformer, as well as a plurality of secondary windings electromagnetically coupled to each of the primary windings, and

wherein the power supply transformer for the control circuit (13) obtains the gate power of each semiconductor device configuring the second inverter unit, from the output of each secondary winding.

5. The power conversion device (1) according to claim 1 or 2,

wherein the power supply transformer for the control circuit (13) includes a plurality of parallel-connected primary windings that are connected in parallel to the secondary circuit of the LLC transformer, as well as a plurality of secondary windings electromagnetically coupled to each of the primary windings, and

wherein the power supply transformer for the control circuit (13) obtains the gate power of each semiconductor device configuring the second inverter unit, from the output of each secondary winding.

6. A power supply device using a power conversion device according to any one of claims 1 to 5, wherein a plurality of output circuits of the second inverter unit are connected in series for each phase to provide a multi-phase AC output.

7. A power supply device using a power conversion device according to any one of claims 1 to 5, wherein the output circuit of the second inverter unit provides a multi-phase AC output.

8. A control method for a power conversion device (1), wherein the power conversion device (1) is the power conversion device (1) according to any one of claims 1 to 5,

wherein with respect to the resonant frequency in the LLC transformer (3) as well as the driving frequency in the first inverter unit, the first inverter unit is controlled by switching among the operation mode in which the driving frequency and the resonant frequency are equal to each other, the operating mode in which the driving frequency is higher than the resonant frequency, and the operating mode in which the driving frequency is lower than the resonant frequency.

9. The control method for a power conversion device (1) according to claim 8,

wherein the operation mode in which the driving frequency is lower than the resonant frequency is selected for the area in which the input voltage of the first inverter unit is lower than the first voltage,

wherein the operation mode in which the driving frequency is higher than the resonant frequency is selected for the area in which the input voltage of the first inverter unit is higher than the second voltage; and

wherein the operation mode in which the driving frequency is made equal to the resonant frequency is selected for the area in which the input voltage of the first inverter unit is higher than the first voltage and lower than the second voltage.

10. A control method for a power supply device, wherein the power supply device is the power supply device according to claim 6 or 7,

wherein with respect to the resonant frequency in the LLC transformer as well as the driving frequency in the first inverter unit, the first inverter unit is controlled by switching among the operation mode in which the driving frequency and the resonant frequency are equal to each other, the operating mode in which the driving frequency is higher than the resonant frequency, and the operating mode in which the driving frequency is lower than the resonant frequency.

11. The control method for a power supply device according to claim 10,
    wherein the operation mode in which the driving frequency is lower than the resonant frequency is selected for the area in which the input voltage of the first inverter unit is lower than the first voltage,
    wherein the operation mode in which the driving frequency is higher than the resonant frequency is selected for the area in which the input voltage of the first inverter unit is higher than the second voltage; and
    wherein the operation mode in which the driving frequency is made equal to the resonant frequency is selected for the area in which the input voltage of the first inverter unit is higher than the first voltage and lower than the second voltage.

# FIG. 1

EP 3 151 403 A2

# FIG. 2

FIG. 3

## FIG. 4

EP 3 151 403 A2

# FIG. 5

EP 3 151 403 A2

*FIG. 6*

100

2

To

In2

Q3 Q4

Q1 Q2

1

R

C2

V Tout

31 3 32 33

34

I Tin

In1

C1

Ti

13

17a — Q1 GATE POWER SUPPLY CIRCUIT

17b — Q2 GATE POWER SUPPLY CIRCUIT

17c — Q3 GATE POWER SUPPLY CIRCUIT

17d — Q4 GATE POWER SUPPLY CIRCUIT

17e — CONTROL POWER SUPPLY CIRCUIT

CONTROLLER FOR CONTROLLING EACH GATE CIRCUIT

16a 16b 16c 16d 16e

42a 42b 42c 42d 42e

41a 41b 41c 41d 41e

4a 4 4b 4c 4d 4e

## FIG. 7

V Tout

I Tin

T[s]

## FIG. 8

V Tout

I Tin

T[s]

# FIG. 9

V Tout

I Tin

T[s]

FIG. 10

FIG. 11

EP 3 151 403 A2

# FIG. 12

STEP DOWN
(UPPER LIMIT)

Vdc

STEP UP
(LOWER LIMIT)

CONSTANT FREQUENCY
(HIGH EFFICIENCY)

Vin

SOLAR OUTPUT

FINE WEATHER

CLOUDY
WEATHER

Vin

D1      D2      D3

DRIVING FREQUENCY

LOW
FREQUENCY

CONSTANT

HIGH
FREQUENCY

LLC RESONANT FREQUENCY

Vin

Vin1      Vin2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2007151224 A